# DEMANDE DE BREVET EUROPEEN

(11) **EP 0 560 644 A1**
(43) Date de publication de la demande: **15.09.1993**
(21) Numéro de dépôt: 93400410.2
(22) Date de dépôt: 18.02.1993
(51) Int. Cl.: A47B 13/02, F16B 12/40

(54) **Support de plateau démontable utilisable isolé ou en série et piètement**

(30) Priorité: 11.03.1992 FR 9202894
(71) Demandeur: SEDI, FR-30700 Uzes (FR)
(72) Inventeur: Berville, Claude, F-30700 Uzes (FR)
(74) Mandataire: Rinuy, Santarelli

(57) **Abrégé**

Support de plateau (3, 13) démontable utilisable isolé ou en série, l'unité de base comprenant au moins trois pièces distinctes à savoir au moins une entretoise (2, 12) et deux piètements (1, 1', 11), chacune des extrémités (4) de l'entretoise (2, 12) ou des entretoises coopérant par fixation (5) du type mâle-femelle avec les piètements, les piètements (1, 1', 11) comprenant au moins deux éléments de fixation (6, 7) permettant l'utilisation en série, caractérisé en ce que les piètements (1, 1', 11) sont agencés relativement aux éléments de fixation (6, 7) qu'ils comportent de manière que la mise en place de l'entretoise (2, 12) est possible du même côté du piètement tant au niveau du premier que du second élément de fixation, et piètement pour support.

## Description

La présente demande concerne un support de plateau démontable utilisable isolé ou en série ainsi qu'un piètement.

La table multi-usages est le meuble principal pour l'équipement d'une salle polyvalente. Elle doit s'adapter à tous styles de réunions telles que des repas, des mariages, des conférences, des réunions politiques etc....

La salle polyvalente joue généralement un rôle de gymnase, de salle des fêtes, de repas et de réunion. La table multi-usages doit donc être susceptible d'être installée puis démontée très rapidement pour laisser la place à une autre activité. Ses éléments constitutifs doivent être empilables et aisément transportables.

La table multi-usages est utilisée individuellement ou en rangée par accouplement de plusieurs unités. Elle doit être robuste, l'usage en étant parfois brutal, mais également légère pourfaciliter une constante manipulation.

La table type est composée de piètements (deux pour une table isolée, trois pour deux tables accouplées, quatre pour trois tables accouplées, etc ...) reliés entre eux par une ou deux entretoises. Les piètements et éventuellement l'entretoise supportent un plateau en général stratifié, formant ainsi une table. Les plateaux sont généralement tous de dimension identique.

Les supports actuellement connus sont conçus avec une configuration des piètements et des entretoises tels que la fixation de l'entretoise au piètement ne se fait qu'à une seule position, intérieure par rapport à la table. Cette configuration a pour inconvénient majeur, aussi bien en bout d'une rangée de tables qu'en cas d'utilisation en table isolée de laisser aux extrémités, en position extérieure par rapport à la table, des éléments inemployés, destinés à recevoir le plateau suivant, qui dépassent en faisant une saillie parfois dangereuse et toujours inesthétique. C'est le cas tant de l'élément destiné à recevoir l'entretoise que de la partie supérieure du piètement destinée à recevoir l'extrémité du plateau. Une telle configuration est illustrée ci-après dans les dessins.

Il serait donc souhaitable de disposer d'un support de plateau démontable, utilisable isolé ou en série, doté des qualités précédemment citées, tout en évitant que des éléments disgracieux et dangereux ne dépassent des bords des plateaux.

C'est pourquoi la présente demande a pour objet un support de plateau démontable utilisable isolé ou en série, l'unité de base comprenant au moins trois pièces distinctes à savoir deux piètements et au moins une entretoise, chacune des extrémités de l'entretoise ou des entretoises coopérant par fixation du type mâle-femelle avec les piètements, les piètements comprenant au moins un premier et un second élément de fixation situés de part et d'autre du plan constitué par le piètement et permettant l'utilisation en série, caractérisé en ce que les piètements sont agencés relativement aux éléments de fixation qu'ils comportent de manière que la mise en place de la même entretoise située d'un côté du piètement par rapport au plan vertical limitant l'extrémité d'un plateau est possible tant au niveau du premier que du second élément de fixation.

Le résultat ci-dessus décrit peut être vérifié directement et avec succès au moyen de tests et d'essais simples qui consistent à essayer de faire coopérer l'entretoise et l'élément de fixation situé sur le piètement et vérifier que l'installation et le démontage de l'entretoise ne sont gênés par aucun élément du piètement.

Dans le cadre de la présente invention par "démontable"l'on entend démontable rapidement et facilement, c'est à dire sans utilisation d'accessoire de démontage tel que tournevis, clés ou autre ; le démontage d'un élément unique est habituellement réalisable très rapidement et généralement en moins de quinze secondes.

Les supports de plateau démontables selon l'invention sont utilisables isolés ou en série. Ainsi pour une utilisation isolée l'unité de base comprend au moins trois pièces distinctes à savoir deux piètements et au moins une entretoise. Les supports selon l'invention peuvent mettre en oeuvre deux entretoises mais de préférence une seule entretoise.

Pour une utilisation de deux tables côte à côte, dans le cas d'une configuration à une seule entretoise, il n'y a qu'à rajouter à l'unité de base une entretoise et un piètement pour doubler la longueur de la table. De même chaque allongement supplémentaire met en oeuvre l'addition d'une entretoise et d'un piètement.

Dans ce qui suit, on décrira le cas de supports ne comprenant qu'une seule entretoise, sauf exception évidente selon le contexte.

Les indications données dans le cas ne mettant en oeuvre qu'une entretoise sont parfaitement transposables aux supports mettant en oeuvre deux entretoises par unité.

Les piètements comprennent deux éléments de fixation de l'entretoise.

Dans le cas d'un plateau qui n'est pas situé à l'extrémité d'une série, un piètement reçoit au niveau d'un de ses éléments de fixation l'entretoise du côté gauche, tandis que l'autre élément de fixation reçoit l'entretoise du côté droit. Ces éléments de fixation peuvent être de tout type bien connu mais habituellement ils sont extrêmement simples et comportent un bout de tube de section carrée, destiné à recevoir l'extrémité de l'entretoise de section également carrée également et complémentaire.

La partie femelle peut être située aussi bien sur le piètement que sur l'entretoise mais de préférence la partie femelle est située sur le piètement. Dans un tel cas on introduit l'entretoise dans l'élément femelle de fixation.

Les éléments mâles et femelles de fixation pourraient avoir une section circulaire. Dans un tel cas l'entretoise aurait un certain mouvement de rotation vis à vis du piètement. C'est pourquoi, la section aussi bien de la partie mâle que de la partie femelle correspondante est avantageusement non parfaitement circulaire à savoir par exemple triangulaire, hexagonale et de préférence carrée ou rectangulaire.

Les entretoises peuvent être placées a toute hauteur ; toutefois de préférence elles sont placées en position élevée pour éviter d'être heurtées par exemple par les pieds ou les genoux. De façon avantageuse, les entretoises remplissent une fonction supplémentaire de support du plateau lorsque le haut des entretoises mises en place se trouve au même niveau que la partie supérieure des piètements.

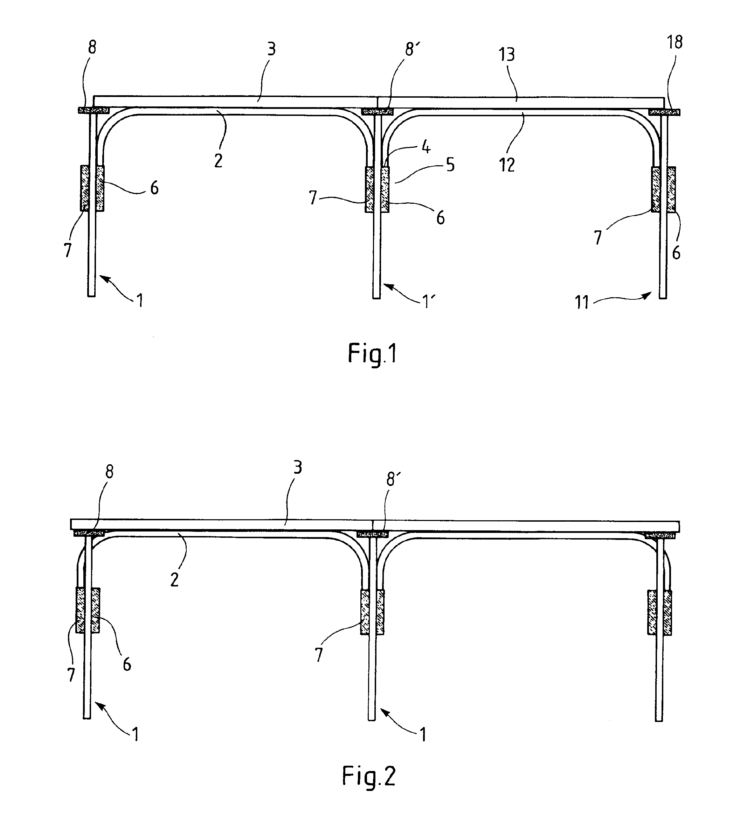

Les entretoises peuvent avoir toute forme mais de préférence celles-ci ont une forme très simple telle la forme d'un U dont la partie médiane est allongée tel qu'illustré sur les figures 1, 2 et 3.

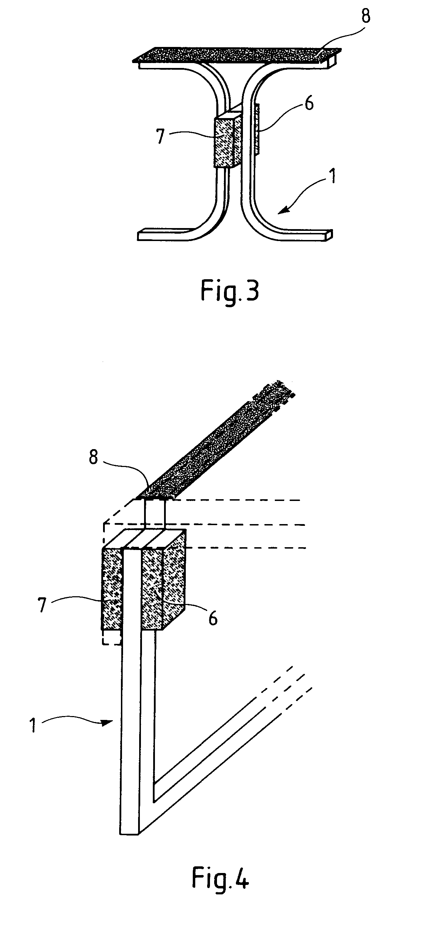

L'entretoise en U pourra également avantageusement avoir deux coins à angles droits correspondant aux parties de préférence mâles des éléments de fixation comme illustré sur la figure 4, en pointillés.

Le caractère original de la présente invention tient au fait que l'entretoise, en restant du même coté du piètement, c'est à dire du même côté du plan vertical séparant deux tables ou situé à l'extrémité d'une rangée de tables, peut être fixée indifféremment au niveau de l'un ou de l'autre des éléments de fixation. Ainsi lors de l'utilisation en table unique, l'entretoise pourra être fixée au niveau de l'élément de fixation extérieur que comporte le piètement. Pour obtenir ce résultat, le piètement ne renferme jamais aucune pièce juste au dessus du point de fixation de l'entretoise, permettant ainsi l'accès à l'un ou à l'autre des éléments de fixation, dans la configuration décrite dans les figures.

Dans le cas de l'utilisation en série, on utilisera l'élément de fixation situé du même coté que celui de l'entretoise pour placer cette dernière. L'élément de fixation du côté extérieur est disponible et accessible à l'entretoise du module suivant.

Les configurations permettant la mise en oeuvre ci-dessus sont variées. Dans le cas de l'utilisation d'une seule entretoise, le haut de celle-ci ne devra, pour des raisons de stabilité, pas dépasser le niveau supérieur des piètements. Le haut de l'entretoise sera donc, lorsqu'elle sera en place, à un niveau inférieur à celui du haut des piètements et de préférence au même niveau que ceux-ci pour constituer un support supplémentaire faisant office de renfort pour le plateau. L'entretoise unique sera en général placée en position médiane vis à vis de la largeur du piètement.

Dans le cas de l'utilisation de plusieurs, de préférence deux entretoises, celles-ci peuvent servir de support au plateau en lieu et place des piètement eux mêmes. Dans un tel cas, le haut des entretoises sera au moins au niveau du haut des piètements et avantageusement plus élevé que ceux-ci.

Dans un tel cas les deux entretoises seront avantageusement placées au niveau des deux extrémités des piètements pour une meilleure stabilité.

Afin de bénéficier d'un support maximum, le haut des entretoises sera de préférence situé au même niveau que le niveau supérieur des piètements.

La présente invention a enfin pour objet les piètements pour supports ci-dessus, notamment ceux ayant une forme générale en X, particulièrement ceux constitués de deux pièces en U dont une branche sert de pied, et l'autre est située du côté du plateau, reliées par les éléments de fixation des entretoises et tout particulièrement ceux dont les éléments de fixation des entretoises sont des bouts de tubes placés verticalement, par exemple soudés pour solidariser deux pièces en U, comme illustré ci-après dans les dessins.

La fabrication de tous les éléments ci-dessus est tout à fait conventionnelle.

L'invention sera mieux comprise si l'on se réfère aux dessins annexés sur lesquels la figure 1 représente une table multi-usages de l'art antérieur vue de face.

La figure 2 représente en vue de face, une table multi-usages selon la présente invention mettant en oeuvre le support de plateau revendiqué.
Les figures 3 et 4 schématisent, en perspective, des piètements selon l'invention. La première avec un pied en X et une seule entretoise et la seconde la moitié d'un piètement rectangulaire à deux entretoises.
La figure 1 représente une table de l'art antérieur à une seule entretoise centrale comportant deux modules.

L'unité de base comporte deux piètements 1, 1' et une entretoise 2. L'unité complémentaire comprend un piètement 11 et l'entretoise 12. Les piètements et l'entretoise supportent les plateaux 3 et 13.

Les entretoises 2, 12 ont une forme générale en U, ayant la partie médiane allongée ; l'extrémité 4 des barres de l'entretoise 2,12 forme la partie mâle d'une fixation 5 dont la partie femelle 6, 7 située sur le piètement est constituée d'une section de tube de dimension et de forme adaptée à recevoir la partie mâle.

Par référence au piètement 1, l'entretoise ne peut être introduite que dans la partie femelle 6 et non dans la partie femelle 7 en raison de la présence réelle du piètement 1 qui fait obstacle à l'introduction de l'entretoise 2 dans la partie femelle 7. On voit aussi que la partie femelle 7 est en relief et dépasse vers l'extérieur du piètement 1. De même la partie supérieure du piètement 1, 1', 11 comporte une plaque 8, 8', 18 supportant le plateau 3, 13 transversalement. Les plaques 8, 18 débordent aussi des plateaux pour les piètements extérieurs 1, 11.

La figure 2 schématise les supports de la présente invention analogues à ceux de la figure 1.

Ils en diffèrent en ce que la structure du piètement n'empêche pas l'entretoise d'être introduite dans la partie femelle 7 de l'élément de fixation 5.

En effet, dans la configuration ici représentée, le piètement a une forme générale en X dont deux extrémités sont en contact avec le sol, et les deux autres portent le plateau 3. Les parties femelles 6, 7 de la fixation 5 sont situées au niveau des points communs aux branches du X; il n'y a donc pas de matière formant obstacle à l'introduction d'une entretoise dans l'une des parties femelles 6 ou 7 en restant du même côté du piètement. Un exemple d'un tel piètement en X est décrit ci-après, et illustré à la figure 3.

Une forme en X du piètement n'est pas indispensable ; une forme par exemple de cadre carré ou rectangulaire est utilisable, à condition de prévoir les décrochements nécessaires dans le cadre si l'on ne veut pas que le haut des entretoises dépasse le haut des piètements. Un exemple d'une telle réalisation est décrit ci-après et illustré à la figure 4.

Sur la figure 2, on voit donc que pour le piètement central, une extrémité de l'entretoise 2 est fixée dans la partie femelle 7 du même coté que celui où est située l'entretoise 2, alors que l'autre extrémité, au niveau du piètement 1, est introduite dans la partie femelle 7 située de l'autre côté que celui où se trouve l'entretoise.

Ainsi, la plaque supérieure 8 du piètement, et la partie femelle 7 ne débordent pas les limites du plateau 3.

Il va de soi qu'en ce qui concerne les fixations, l'entretoise peut constituer la partie femelle, et la partie mâle est située sur le piètement.

Avantageusement cependant, la partie femelle est située sur le piètement et est constituée de sections de tube, par exemple soudées au reste d'un piètement métallique.

Les supports de l'invention peuvent être réalisés dans tous les matériaux habituels utilisés pour l'ameublement, tels que les matières plastiques, le bois, et de préférence un métal tel que l'acier.

On voit aussi que les éléments constituant les supports peuvent être parfaitement symétriques. De ce fait, seules deux sortes d'éléments sont néces- saiies, les piètements et les entretoises, et cependant les tables réalisées avec de tels supports et les plateaux adaptés ont un remarquable fini, tant montées à l'unité qu'en série, et ne comportent pas d'éléments dangereux en relief dépassant les limites des plateaux.

Le recouvrement des plateaux par une nappe n'occasionne aucune zone rabaissée au niveau des extrémités des plateaux, et le tomber de la nappe est net puisque aucun élément 6, 7 ne dépasse.

La figure 3 permet de distinguer la structure en X des piètements de la figure 2. On observe que juste au dessus des parties femelles 6 et 7, aucun élément du piètement ne gène l'introduction d'une entretoise dans n'importe laquelle des parties femelles 6 et 7, en apportant l'entretoise du même côté. Pour accentuer l'absence d'obstacle, la plaque supérieure 8 pourrait être interrompue au dessus des parties femelles si nécessaire en fonction de la longueur des parties verticales des entretoises. Les parties femelles ont ici une section carrée. Les échelles ne sont pas respectées pour la clarté du schéma.

La figure 4 permet de distinguer le détail d'une structure de cadre globalement carrée ou rectangulaire d'un piètement selon l'invention.

Les deux coins (un seul est représenté) supérieurs ont un décrochement vers l'intérieur du cadre. Les parties femelles 6 et 7 sont situées le long des côtés verticaux. Le décrochement est d'une hauteur correspondant à la courbure d'une entretoise en U, ou à la section d'un tube aussi en U, mais à base plane, les deux branches du U étant perpendiculaires à cette base.

Dans un tel cas, le haut des entretoises peut dépasser si désiré le haut des plaques 8 qui sont superflues, puisque les entretoises (2 par unité) peuvent alors servir de support aux plateaux. La hauteur des parties femelles 6 et 7 détermine la hauteur relative des entretoises par rapport aux piètements.

## Revendications

1. Support de plateau (3, 13) démontable utilisable isolé ou en série, l'unité de base comprenant au moins trois pièces distinctes à savoir au moins une entretoise (2, 12) et deux piètements (1, 1', 11), chacune des extrémités (4) de l'entretoise (2, 12) ou des entretoises coopérant par fixation (5) du type mâle-femelle avec les piètements, les piètements (1, 1', 11) comprenant au moins un premier et un second élément de fixation (6, 7) situés de part et d'autre du plan constitué par le piètement et permettant l'utilisation en série, caractérisé en ce que les piètements (1, 1', 11) sont agencés relativement aux éléments de fixation (6, 7) qu'ils comportentde manière que la mise en place de la même entretoise (2, 12) située d'un côté du piètement par rapport au plan vertical limitant l'extrémité d'un plateau est possible tant au niveau du premier que du second élément de fixation.

2. Support selon la revendication 1, caractérisé en ce que le piètement (1, 1', 11) a une forme générale en X.

3. Support selon la revendication 2, caractérisé en ce que les éléments de fixation (6, 7) sont constitués d'un bout de tube.

4. Support selon la revendication 3, caractérisé en ce que le tube a une section carrée.

5. Support selon la revendication 4, caractérisé en ce que le haut de l'entretoise (2, 12) en place est situé au même niveau que le haut (8) des piètements.

6. Support selon la revendication 1, caractérisé en ce que le piètement (1, 1', 11 ) a la forme générale d'un cadre rectangulaire ou carré.

7. Piètement pour support selon l'une des revendications 1 à 6, caractérisé en ce que la mise en place de l'entretoise est possible du même côté du piètement tant au niveau du premier que du second élément de fixation.

8. Piètement selon la revendication 7, caractérisé en ce qu'il a une forme générale en X.

9. Piètement selon la revendication 8, caractérisé en ce qu'il est constitué de deux pièces en U dont une branche du U sert de pied, et l'autre est située du côté du plateau, reliées par les éléments de fixation des entretoises.

10. Piètement selon la revendication 8, caractérisé en ce que les éléments de fixation des entretoises sont des bouts de tube placés verticalement.
